# EUROPEAN PATENT APPLICATION

(11) **EP 2 722 965 A1**
(43) Date of publication of application: **23.04.2014**
(21) Application number: 12007240.0
(22) Date of filing: 19.10.2012
(51) Int. Cl.: H02J 9/00, G06F 1/32

(54) **Electronic control device and method for reducing stand-by state energy consumption of an electric household appliance**

(71) Applicant: Electrolux Home Products Corporation N.V., 1130 Brussel (BE)
(72) Inventor: Vitall, Fablo, 33080 Porcia (PN) (IT); Aprea, Vincenzo, 33080 Porcia (PN) (IT)
(74) Representative: Nardoni, Andrea

(57) **Abstract**

Household appliance (1) comprising electric loads (2) and an electronic command device (3) which is configured to reduce energy consumption of the electric household appliance (1) during a standby state; the electronic command device (3) comprising first switch device (4) which is connected between the household appliance electric loads (2) and supply lines (31,32), and is configured to switch on/off based on a first control signal (SFC); sensing device (33) which is configured to sense the first electrical quantity (VA) on the supply lines (31,32), and is configured to generate a sensing signal (SHV) which is indicative of the sensed first electrical quantity (VA); electric control unit (20), which is configured to provide the first control signal (SFC) to cause the first switch device (4) to be open/closed, based on the sensing signal (SHV); a second switch device (40) connected between the sensing device (33) and the supply lines (31,32) and configured to be open/closed on the basis of a second control signal (SVS), to cause the sensing device (33) to be connected/disconnected respectively to/from supply lines (31,32). The electric control unit (20) generates the second control signal (SVS) to open said second switch device (40) based on a standby command/request which is indicative of a request of transition of the household appliance (1) from the operating state to the standby state.

## Description

### TECHNICAL FIELD OF THE INVENTION

The present invention relates to reducing standby-state energy consumption of an electric household appliance, in particular a dish-laundry treatment machine, i.e, a laundry washing machine, or a dishwasher, or dryer machine, during a standby state; to which the following description refers purely by way of example.

### STATE OF THE ART

As is known, some new-generation electric household appliances are designed to switch automatically, at the end of an operating cycle, from an operating state to a standby state, in which they remain at rest, waiting a user command to start a new operating cycle.

To reduce energy consumption of the electric household appliance, electronic control devices have been devised over the past few years to switch the appliance to the standby state, at the end of an operating cycle, by automatically opening a number of switches between the electric power network and the appliance devices, to cut off power to the devices, and which, on receiving an enabling signal, close the switches to power the devices and perform another operating cycle.

Though undoubtedly reducing standby-state energy consumption of electric household appliances, the reduction afforded by such electronic control devices fails to comply with recent regulations governing the energy consumption of new-generation appliances wherein it is required to have power consumption below a one watt energy threshold.

### OBJECT AND SUMMARY OF THE INVENTION

The aim of the present invention is hence to provide a method and an electronic control device designed to perform as described above, while maintaining standby-state consumption of the electric household appliance, preferably, below a one watt energy threshold.

The above aim is achieved by the present invention, which relates to a method and an electric household appliance provided with an electronic control device, as claimed in the attached claims.

In detail, a first aspect of the present invention provides a household appliance comprising electric loads configured to perform prefixed appliance operations during an operating state, and an electronic command device which is configured to reduce energy consumption of the electric household appliance during a standby state, and is connectable to an electric power supply through supply lines so as to be supplied by a first electrical quantity; the electronic command device comprising first switch means connected between the household appliance electric loads and the supply lines and configured to switch on/off based on a first control signal; sensing means which are connected to the supply lines to sense said first electrical quantity and are configured to generate a sensing signal which is indicative of the sensed first electrical quantity; electric control means, which are configured to receive said sensing signal, and provide said first control signal to cause the first switch means to be open/closed, based on said sensing signal; second switch means connected between said sensing means and said supply lines and configured to be open/closed on the basis of a second control signal to cause the sensing means to be connected/disconnected respectively to/from supply lines; electric control means are further configured to generate said second control signal to open said second switch means based on a standby command/request which is indicative of a request of transition of the household appliance from the operating state to the standby state.

Preferably, the household appliance comprises a switching mode low power supply unit, which is connected to said supply lines to be supplied by said first electrical quantity corresponding to a first supply voltage, and is configured to supply a second supply voltage to said electric control means and to said sensing means; the switching mode low power supply unit comprising a first control terminal and being further configured to switch from an operating state to a standby state, when said first control terminal receives a command signal; the electric control means being further configured to provide said command signal to said switching mode low power supply unit and generate said first control signal to open said first switch means based on said standby command/request.

Preferably, the second switch means comprise at least one opto-triac, which is configured to disconnect said sensing means from supply lines based on said second control signal, and is supplied by second supply voltage generated by the switching mode low power supply unit; the switching-off of said switching mode low power supply unit to a standby state causes the interruption of the second supply voltage to said sensing means and to said at least one opto-triac.

Preferably, the switching mode low power supply unit comprises: a switching regulator unit comprising a second control terminal and being configured to switch from the standby state to the operating state when detects a prefixed voltage variation on the second control terminal; a low voltage auxiliary supply means supplying a predetermined low voltage, different to zero, to said second control terminal during at least standby state; the switching mode low power supply unit being configured to turn-off said switching regulator unit during said standby state and maintains turn-on said low voltage auxiliary supply means so as to supply said predetermined low voltage different to zero to said second control terminal.

Preferably, the sensing means comprise a sensing circuit which is connected to said supply lines by means of said second switch means, and is configured to sense said first supply voltage so as to generate said sensing signal; and a supply circuit connected to said switching mode low power supply unit so as to receive said second supply voltage; said supply circuit being configured to automatically switch off when said switching regulator unit switches on said standby state; said sensing circuit being configured to automatically switch off when said switch means are open.

Preferably, the electric control means are configured to provide said second control signal and first control signal based on said standby command/request, so that said second switch means are open before opening of said first switch means.

Preferably, the standby command/request is detected/generated when a prefixed rest period of the appliance has been spent, and/or when a prefixed appliance event has been detected, and/or when the user selects a command in a appliance user interface.

### BRIEF DESCRIPTION OF THE DRAWINGS

A non-limiting embodiment of the present invention will be described by way of example with reference to the accompanying drawings, in which:
- Figure 1 shows, schematically, a household appliance provided with an electronic command device configured to reduce standby-state energy consumption, in a stand-by state, in accordance with the teachings of the present invention;
- Figure 2 shows, schematically, the household appliance provided with the electronic command device shown in figure 1, in an operating state;
- Figure 3 shows, schematically, a first variation of the electronic command device of the household appliance shown in Figure 1;
- Figure 4 shows schematically a second variation of the electronic command device of the household appliance shown in Figure 1.

### DETAILED DESCRIPTION OF PREFERRED EMBODIMENTS OF THE INVENTION

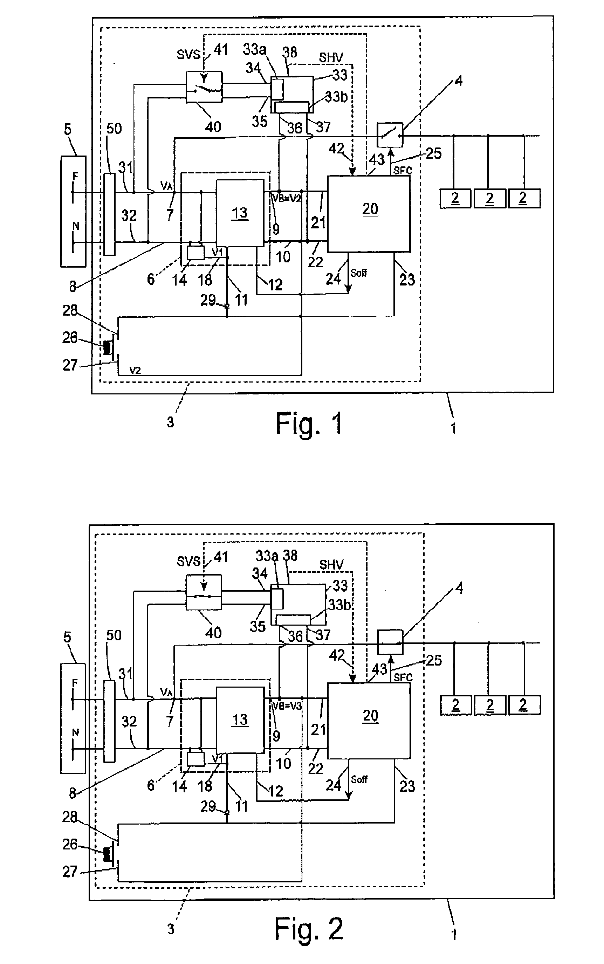

Number 1 in the Figures 1 and 2 indicates as a whole an electric household appliance (shown schematically) such as a dish/laundry treatment machine, which can be, for example, a washing machine, or a dishwasher, or a drier or any other similar kind of dish/laundry treatment machine.

The electric household appliance 1 comprises a number of known electric/electronic devices/units, referred to hereinafter simply as household appliance electric loads 2, for performing several appliance operations, such as washing and/or drying operations, which, being known, are not described in detail.

According to a preferred embodiment of the invention, the electric household appliance 1 also comprises an electronic control device 3 which is configured to automatically switch the electric household appliance 1 from operating state to a standby state when a standby command/request (afterwards disclosed in detail) is detected/received/determined and, at the same time, reduce standby-state energy consumption, preferably, below above one watt energy threshold during the standby state.

Preferably, the electronic control device 3 is further configured to switch the electric household appliance 1 from a standby state to the operating state in response to a user's manual command, as described in detail below.

With reference to Figures 1 and 2, the electronic control device 3 comprises a switch relay 4 which is interposed between household appliance electric loads 2 and an electric power network 5, and is configured to switch, on the basis of a first control signal SFC, between an open state (shown schematically in the Figure 1) cutting-off electric connection between electric power network 5 and household appliance electric loads 2, and a closed state (shown schematically in the Figure 2), in which household appliance electric loads 2 are connected to, and powered by, the electric power network 5.

Preferably, the switch relay 4 is configured to be "normally open", i.e. it remains in the closed state in the presence of the first control signal SFC, and switches automatically to the open state when it does not receive the first control signal SFC.

In the example shown in Figures 1 and 2, the electric power network 5 comprises a neutral line N having a first reference potential corresponding to a neutral potential, and a phase line F having a phase potential. Preferably, the electric power network 5 is designed to generate an alternate supply voltage VA of about 220-230 V on the phase F and neutral N lines.

With regard to the electronic control device 3, it comprises an electronic control unit 20 which is configured to control several operations of household appliance electric loads 2. Furthermore, the electronic control unit 20 is configured to generate the first control signal SFC to selectively disconnect the household appliance electric loads 2 from electrical power network 5, by means of the switch relay 4, during the standby state.

The electronic control device 3 comprises a switching mode low power supply unit 6, which is configured to supply a prefixed supply voltage VB to the electronic control unit 20.

In the example shown in Figures 1 and 2, the switching mode low power supply unit 6 comprises at least a control terminal and at least an output terminal, which supply the prefixed supply voltage VB to the electronic control unit 20.

Preferably, the switching mode low power supply unit 6 is configured to switch between the standby state and the operating state, when detects a first prefixed voltage variation ΔV on the control terminal.

According to the present invention, the electronic control device 3 is configured to connect, at least temporarily, the control terminal to the output terminal having the prefixed supply voltage VB, to generate the first prefixed voltage variation ΔV on the control terminal to cause the switching mode low power supply unit 6 to switch from the standby state to the operating state.

With reference to the Figures 1 and 2, the switching mode low power supply unit 6 comprises: two input terminals 7 and 8 respectively connected to the phase line F and the neutral line N of the electric power network 5, by means of two supply lines 31 and 32, to receive the main supply voltage VA; two output terminals 9 and 10, one of which has a prefixed potential VB while the other terminal has a reference potential.

The switching mode low power supply unit 6 may be configured to supply a low direct supply voltage VB having a nominal value VB=V3=4-12 Volts, and preferably VB=V3=5 Volts through output terminals 9 and 10. Preferably, but not necessarily, nominal potential VB on the output terminal 9 may be about 4-12 volts, preferably 5 volts, while reference potential on the output 10 may be a ground potential.

In the example shown in Figures 1 and 2, the switching mode low power supply unit 6 comprises a first control terminal 11 and is configured to switch from the standby state to the operating state, when detects the first prefixed voltage variation ΔV on the first control terminal 11.

The switching mode low power supply unit 6 detects the first prefixed voltage variation ΔV when the voltage on the first control terminal 11 changes from a high value corresponding to a first prefixed supply voltage V1 to a low value corresponding to a second prefixed supply voltage V2.

During the standby state (Figure 1), the switching mode low power supply unit 6 outputs low supply voltage VB having the second prefixed supply voltage V2, i.e. VB=V2=0 V, whereas into the operating state (Figure 2) the switching mode low power supply unit 6 outputs the low supply voltage VB having the nominal value V3, i.e. VB=V3.

Switching mode low power supply unit 6 further comprises a second control terminal 12, and is configured to switch from the operating state to the standby state, on receiving a command signal Soff on the second control terminal 12.

In the example shown in Figures 1 and 2, switching mode low power supply unit 6 comprises a switching regulator unit 13, which receives the main supply voltage VA by means of the input terminals 7 and 8, and is configured to output the low supply voltage VB to the electronic control unit 20, by means of output terminals 9 and 10 of the switching mode low power supply unit 6.

The switching regulator unit 13 presents two control terminals corresponding to the first 11 and the second control terminal 12 respectively of the switching mode low power supply unit 6 and is configured to switch from the standby state (Figure 1), wherein it outputs the low supply voltage VB having the second supply voltage V2=0, to the operating state (Figure 2), wherein it outputs the low supply voltage VB having the nominal value V3, when the voltage on the first control terminal 11 varies from the first V1 to the second supply voltage V2, i.e. first variation voltage ΔV.

The switching regulator unit 13 is further configured to switch from the operating state to the standby state when the second control terminal 12 receives the command signal Soff.

In the standby state, switching regulator unit 13 is completely off, so as to draw zero electric power, whereas in the operating state, it is on and outputs low supply voltage VB having the nominal value V3 to the electronic control unit 20.

Switching mode low power supply unit 6 further comprises a low voltage power supply circuit 14 connected to the electric power network 5 to receive the main supply voltage VA and presenting an output terminal 18 connected to the first control terminal 11 of the switching regulator unit 13.

Preferably, the low voltage power supply circuit 14 is configured to generate the first supply voltage V1 on the output terminal 18 during at least the standby state. Preferably, the low voltage power supply circuit 14 is configured to continuously generate the first supply voltage V1 on the output terminal 18 during at least the standby state so as to continually supply the first supply voltage V1 to the first control terminal 11 of the switching regulator unit 13. Preferably, the low voltage power supply circuit 14 is configured to continuously generate the first supply voltage V1 on the output terminal 18 during both standby and operative states.

Preferably, when switching mode low power supply unit 6 is in the standby state, low voltage power supply circuit 14 is on and keeps terminal 18 of switching regulator unit 13 at first supply voltage V1.

The low voltage auxiliary power supply circuit 14 comprises a low consumption supply circuit configured to generate the first supply voltage V1 having a value of about 3-6 Volt, and consume an electric power lower than about 10mW.

It should be pointed out that low voltage auxiliary power supply circuit 14 and switching regulator unit 13 may be advantageously integrated in the same electronic circuit.

Preferably, though not necessary, the electronic control device 3 may further comprise an electromagnetic filter 50, which is connected between the electric power network 5 and the input terminals 7 and 8 of the switching mode low power supply unit 6 by means of the two supply lines 31 and 32. Electromagnetic filter 50 is configured to reduce to prefixed levels the amount of electromagnetic interference that sources of electrical energy provides, through electric power network 5, to the household appliance electric loads 2 and switching mode low power supply unit 6.

Preferably, the electromagnetic filter 50 may comprise one or more capacitors and resistors (not illustrated) connected to each other, and it is designed to consume a low electric power, i.e. having a order of magnitude of ten milliwatt.

Preferably, the electromagnetic filter 50 may be configured so that the resistors are automatically switched-off when the electric household appliance 1 switches on in the standby state in order to reduce power dissipation in the resistors so as to cause a reduction of the standby-state energy consumption.

Preferably, the resistors of electromagnetic filter 50 may be connected to the capacitors so that a discharge current path for the energy stored in the filter capacitors is provided, and risks to anyone that by accident touches the supply lines 31 and 32 during the stand-by state are reduced.

According to a preferred embodiment of the present invention, the electronic control device 3 further comprises a sensing device 33 which is configured to sense/measure an electric quantity corresponding to the current and/or voltage that electric power network 5 supplies to electric loads 2 and outputs a sensing signal SHV which is indicative of the sensed/measured electric quantity, i.e. current/voltage.

Preferably, sensing signal SHV is provided to the electronic control unit 20, which determines sensed current and/or sensed voltage on the basis of the sensing signal SHV and verifies whether the current/voltage that electric power network 5 supplies to household appliance electric loads 2 meets prefixed supply requirements.

According to a preferred embodiment of the present invention, the sensing signal SHV may be indicative of the measured main supply voltage VA, and the electronic control unit 20 may be configured to determine, based on the sensing signal SHV, the following status: a first supply status, if the measured main supply voltage VA is substantially a prefixed nominal voltage; and/or a second supply status, if the difference between the measured main supply voltage VA and the prefixed nominal voltage is greater than zero but lower than a prefixed voltage threshold; and/or a third supply status, if the difference between the measured main supply voltage VA and the prefixed nominal voltage is greater than the prefixed voltage threshold.

During the operating state, electronic control unit 20 may generate the first control signal SFC to cause the switch relay 4 to be open when third supply status is detected, or when second supply status remains for a prefixed period.

With reference to Figure 1, the sensing device 33 comprises: a first terminal 34 preferably connected to the supply line 31, a second terminal 35 preferably connected to the supply line 32, and a third 36 and a fourth terminals 37 connected to the two output terminals 9 and 10 respectively of the switching mode low power supply unit 6 so as to be supplied with the low supply voltage VB.

With reference to the example shown in Figure 1, the sensing device 33 further comprises a fifth terminal 38 generating the sensing signal SHV which is indicative of the measured high voltage, i.e. the main supply voltage VA.

Preferably, the sensing device 33 comprises a sensing circuit 33a, which is connected to the first and second terminals 34 and 35, and is configured to sense/measure the main supply voltage VA so as to generate the sensing signal SHV based on the measured voltage; and a supply circuit 33b which is connected to third 36 and a fourth terminals 37 and is configured to supply a prefixed voltage to the sensing circuit 33a. It should be pointed out that the sensing device 33 is completely switched off, and its energy consumption is null, when sensing circuit 33a is disconnected to the supply lines 31,32 and supply voltage to the supply circuit 33b is interrupted.

According to a preferred embodiment of the present invention, the electronic control device 3 further comprise a switch device 40, which is interposed/arranged between at least one of the supply lines 31, 32 and the sensing device 33 and is configured to disconnect/connect, on command, the sensing device 33 form/to the supply lines 31, 32.

Preferably, switch device 40 is configured to switch, on the basis of a second control signal SVS, between an open state (shown schematically in the Figure 1) cutting-off electric connection between electric power network 5, i.e. supply lines 31, 32 and the sensing device 33, and a closed state (shown schematically in the Figure 2), in which sensing device 33 is connected to supply lines 31, 32 so as to be powered by the electric power network 5.

In the example shown in Figures 1 and 2, the switch device 40 is connected between the supply lines 31, 32 and the first and second terminals 34, 35 of the sensing device 33, and presents a control terminal 41 configured to receive the second control signal SVS. Preferably the switch device 40 may be an electronic switch or an electromechanical switch or similar known devices.

According to a preferred embodiment the switch device 40 may be embodied as one or more opto-triac (Optic Triode for Alternating Current) which may be connected between the supply lines 31, 32 and the first 34 and/or the second terminal 35 of the sensing device 33. The opto-triac may further comprise two additional terminals (not shown) connected to the two output terminals 9 and 10 of the switching mode low power supply unit 6 to be supplied with the low supply voltage VB.

It should be pointed out that each opto-triac is completely switched off, and its consumption is null, when low supply voltage to its additional terminals is interrupted.

Regarding with electronic control unit 20, it may comprise preferably, but not necessarily, a microprocessor, and has two input terminals 21, 22 connected to output terminals 9, 10 respectively of the switching regulator unit 13 to receive low supply voltage VB.

Electronic control unit 20 further comprise an output terminal 25 supplying the first control signal SFC to the switch relay 4; a sensing terminal 23; and an output terminal 24 generating the command signal Soff.

Electronic control unit 20 further comprises an input terminal 42 receiving the sensing signal SHV generated by the sensing device 33, and an output terminal 43 by which the second control signal SVS is provided to the switch device 40.

In the example shown in Figures 1 and 2, the output terminal 24 is connected to the second control terminal 12 of the switching regulator unit 13 and the electronic control unit 20 is configured to generate the command signal Soff when determines a prefixed variation voltage or a determinate voltage on the sensing terminal 23.

Preferably, electronic control unit 20 is configured to generate the command signal Soff on the basis of the prefixed variation voltage on the sensing terminal 23 and according to the appliance operating states. In detail, electronic control unit 20 may be configured to output command signal Soff when detects the prefixed variation voltage on the sensing terminal 23 during predetermined operative phases of the dish-laundry treatment cycles, i.e. when the dish-laundry treatment cycles is completed.

The electronic control unit 20 is further configured to switch to an on-state, when it is supplied with the nominal low supply voltage VB having the nominal voltage VB=V3 (Figure 2) on the inputs terminals 21 and 22, and to the off-state, when inputs terminals 21 and 22 are supplied with second supply voltage VB=V2=0 volt.

The electronic control device 3 further comprises a pushbutton 26, which has a first terminal 27 connected to the output terminal 9 of the switching regulator unit 13 of the switching mode low power supply unit 6, and a second terminal 28 connected to the sensing terminal 23 of electronic control unit 20.

The second terminal 28 of the pushbutton 26 is further connected to the first control terminal 11 of the switching regulator unit 13 of the switching mode low power supply unit 6, through a one-way electronic component, such as a diode 29.

In the example shown in the attached Figures 1 and 2, the diode 29 has the anode terminal connected to the first control terminal 11 of the switching regulator unit 13 of the switching mode low power supply unit 6, and the cathode terminal connected to the second terminal 28 of the pushbutton 26.

Operation of electronic control device 3 of the electric household appliance 1 will now be described, assuming that the switching mode low power supply unit 6 is initially in the standby state.

In detail, if switching mode low power supply unit 6 is in the standby state, low voltage power supply circuit 14 is on and keeps terminal 11 of switching regulator unit 13 at first supply voltage V1.

Accordingly, switching regulator unit 13 is in the off-state and low supply voltage VB on the output terminal 9 presents the second supply voltage, i.e. VB=V2=0 Volt.

At this stage, the switch device 40 is in the open state, and the sensing device 33 is completely off because, on one hand, the switching regulator unit 13 is in the off-state and thus does not supply voltage to the supply circuit 33b and, on the other hand, the sensing circuit 33a is disconnected to the supply lines 31,32 by the open switch device 40.

In addition, at this stage, electronic control unit 20 is also in the off-state, and switch relay 4, not receiving switch-on signal SFC, stays open, thus cutting off power to electric loads 2, i.e. disconnecting them from electric power network 5.

In connection with the above, it should be pointed out that, at this stage, the whole consumption of control device 3 is essentially based on amounts of consumptions of auxiliary supply circuit 14, i.e. 10mW, since the switching regulator unit 13, the electronic control unit 20 and the sensing device 33 are completely switch off.

As a matter of the fact, the applicant has found that interruption of the sensing circuit 33a by means of switch device 40 and, at the same time, interruption of the supply voltage to supply circuit 33b caused by switching off of the switching regulator unit 13, allows to completely cut the consumption of the sensing device 33. In detail, applicant has found that in standby state the switching off of the sensing device 33 allows to usefully reduce electric consumption of control device 3 of about 100-150 mW.

Moreover, the applicant has found that by using at least one opto-triac, the electric consumption is further reduced because of the switching off of the switching regulator unit 13. As a matter of the fact, when the switching regulator unit 13 is off, the second supply voltage supplied to the opto-triac is 0 Volt and consequently electric consumption of the opto-triac is null.

Preferably, appliance 1 may be turned on from a stand-by condition shown in Figure 1, by pressing pushbutton 26.

More specifically, when user presses the pushbutton 26, it connects output terminal 9, at second supply potential V2 to first control terminal 11 of switching mode low power supply unit 6, and to sensing terminal 23 of electronic control unit 20.

At this stage, the voltage on the first control terminal 11 of the switching regulator unit 13 impulsively changes from V1 to V2 causing the first prefixed variation voltage ΔV,

On detecting the first prefixed variation voltage ΔV on the first control terminal 11, the switching regulator unit 13 of the switching mode low power supply unit 6 switches from the standby state to the on-state, and so generates a low supply voltage VB of nominal value V3 (Figure 2).

Being powered with nominal value V3, the electronic control unit 20 and sensing system 33 switch from the off-state to the on-state.

At this stage, electronic control unit 20 generates the control signal SVS that closes the switch device 40 to cause the sensing circuit 33a to be connected to the supply lines 31, 32, so as to start sensing/measuring of the main voltage VA and generates the sensing signal SHV.

Depending on the information carried by the signal SHV, the electronic control unit 20 further provides the first control signal SFC that closes switch relay 4 to power electric loads 2 from electric power network 5.

It should be outpointed that in the above disclosed phase, push button 26 is maintained pressed for at least a first predetermined time interval Δt1, and the switching regulator unit 13 is configured to change the low supply voltage VB from V2 to V3 in a interval lower than the first predetermined time interval Δt1. Moreover, when the electronic control unit 20 receives the low supply voltage VB, it completes switch-on step in a time shorter than the first predetermined time interval Δt1. For example, the first predetermined time interval Δt1 may be at least 200ms, whereas the switch regulator unit 13 and electronic control unit 20 may be configured to switch from stand-by state to operative state in less of 20ms.

Therefore electronic control unit 20 may be configured to advantageously detect a turn-on user command, i.e. a command to switch the switching regulator unit 13 from standby state to operating state by the user pressing pushbutton 26, when it detects nominal voltage V2 at the sensing terminal 23 in the initial instant wherein electronic control unit 20 switches from the off-state to the on-state.

Switching of electric household appliance 1 from the operating state to the standby state may be controlled by the electronic control unit 20 based on a standby command/request.

Preferably the standby command/request is indicative of a request of transition of the household appliance 1 from the operating state to the stand-by state and may be automatically detected/generated when a prefixed rest period (non working period) of the appliance has been spent, and/or when a prefixed event has been detected in the appliance, i.e. program selector is turned into an "OFF" position, and/or the user selects a turn-off command in the appliance user interface. Analogously a request for passing from a standby state to an on-state of the appliance may be detected/generated when a prefixed event has been detected in the appliance. For example, the appliance status can be changed from standby to an ON status when the user touches a button, and/or selects a treating program by rotating a program selector, and/or when the user opens or closes the drum door.

Electronic control unit 20 generates the second control signal SVS based on the standby command/request so as to open the switch device 40 to cause the sensing circuit 33a to be disconnected from the supply lines 31, 32.

Preferably after the second control signal SVS has been generated, the electronic control unit 20 further provides the command signal Soff to the second control terminal 12 of the switching mode low power supply unit 6 which switches to standby state so as to generate the second supply voltage VB=V2=0V. Interruptions of voltage supply VB to the electronic control unit 20 causes electronic control unit 20 itself to switch from the on-state to the off-state. Being switched off, electronic control unit 20 does not generate the first control signal SFC and, in consequence, the switch relay 4 automatically opens and cuts electric power to electric loads 2.

In addition, interruptions of voltage supply VB causes the supply circuit 33a of the sensing device 33 and the opto-triac(s) to be completely switched off.

According to a preferred embodiment of the present invention shown in Figure 1 e 2, standby command/request can be provided when user presses pushbutton 26, for example, for turning the appliance off.

By pressing the pushbutton 26, user causes a temporary connection between the output terminal 9 of switching mode low power supply unit 6 having nominal voltage V3, and the sensing terminal 23 having a different prefixed voltage, so as to generate in this way the predetermined voltage variation on the sensing terminal 23.

At this stage, on detecting nominal voltage V3 on sensing terminal 23 generated by a user turn-off command, electronic control unit 20 detects a standby command/request and controls, preferably, whether the current operative cycle can be interrupted, i.e. verifies if current household appliance operative phase corresponds or not to one of predetermined interruptible operating phases, and after that it determines on generating the second control signal SVS and the command signal Soff to cause the electric household appliance 1 to switch from operative state to stand-by state.

According to a different embodiment not shown in the drawings, the standby command/request may be communicated to the electronic control unit 20 via a communication line connected thereto. An appropriate circuit is designed for converting a standby determining event, like pressing a button by the user or the expiration of a machine rest time, into a standby command/request and communicating such request to the electronic control unit 20. Said circuit may be integrated on a user interface.

Electronic control unit 20 is advantageously configured to determine a power fail when, on switching from the off-state to the on-state, temporarily detects the nominal voltage value V3 on said sensing terminal 23.

In fact, at the end of the power fail, the voltage of the first control terminal 11 of the switching regulator unit 13 is the first supply voltage V1 so that the switching regulator unit 13 automatically switches on operative state and consequently supplies the nominal voltage V3 to the electronic control unit 20 that automatically switches on.

At this stage, the electronic control unit 20 is able to determine a happened power fail on the basis of voltage on sensing terminal 23.

In detail, if electronic control unit 20, during its switching-on phase, detects nominal voltage V3, i.e. the predetermined variation voltage on sensing terminal 23, it determines that pushbutton 26 has been pressed and so identified a user standby command.

On the other hand, if electronic control unit 20, during its switching-on phase does not detects any variation voltage on sensing terminal 23, i.e, does not detect nominal voltage V3, it determines an happened power fail and may command to generate the second control signal SVS and the command signal Soff so as to automatically switch the electric household appliance in standby state, or may continue the operative phase interrupted by the power fail.

The electronic control device of the electric household appliance described has the major advantage of performing the same standby-state control functions as known control circuits, but using extremely simple, and therefore low-cost circuit architecture, which fully complies with current legal standards governing energy consumption.

In fact, in the standby state, the electronic control device only keeps the auxiliary supply circuit of the switching mode low power supply unit on, which consumes roughly 10*10⁻³ watts or even less, i.e. well below the regulation 0.5-1 watt threshold.

Moreover, the circuit architecture of the electronic control device conveniently provides for easily and cheaply determining power fails in the electric power network.

Clearly, changes may be made to the electric household appliance and electronic control device as described and illustrated herein without, however, departing from the scope of the present invention.

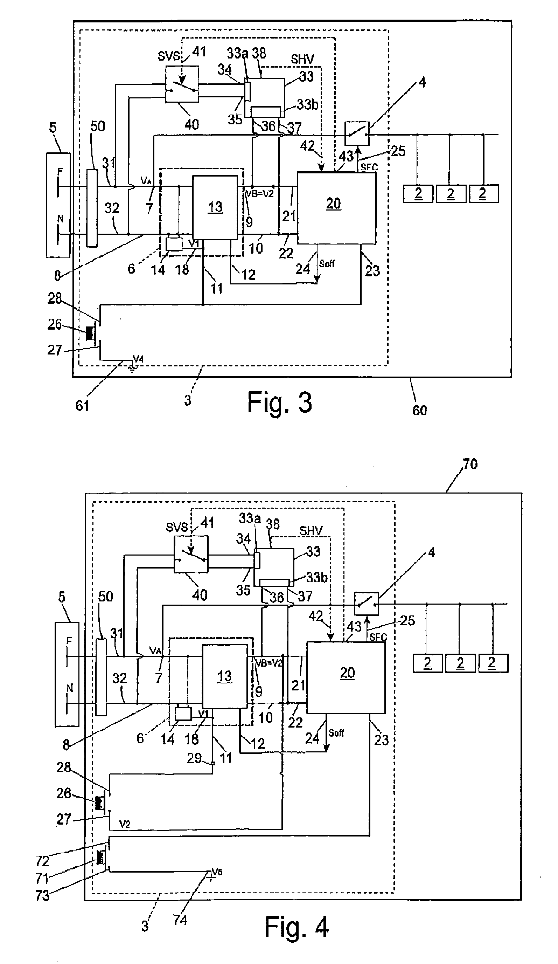

Figures 3 embodiment relates to an electric household appliance 60 similar to electric household appliance 1, and the component parts of which are indicated, wherever possible, using the same reference numbers as for corresponding parts of electric household appliance 1.

Electric household appliance 60 differs from electric household appliance 1 by the pushbutton 26 having the first terminal 27 connected to an auxiliary terminal 61 having a prefixed voltage V4 different from voltage V1 outputted form the low voltage power supply circuit 14. Preferably, the auxiliary terminal 61 may be a ground terminal and the prefixed voltage V4 may be zero Volt.

In the embodiment shown in Figure 3, electronic control unit 20 may be configured to determine standby command/request based on a switch-off user command, i.e. a command to switch the switching regulator unit 13 from operating state to standby state by the user pressing pushbutton 26, when it temporarily detects voltage V4 on the sensing terminal 23 after a prefixed time form its initial switch-on instant.

As previously described with reference to Figures 1 and 2, according to a different embodiment not shown in the drawings, the standby command/request may be communicated to the electronic control unit 20 via a communication line connected thereto. An appropriate circuit is designed for converting a standby determining event, like pressing a button by the user or the expiration of a machine rest time, into a standby command/request and communicating such request to the electronic control unit 20. Said circuit may be integrated on a user interface.

Figures 4 embodiment relates to an electric household appliance 70 similar to electric household appliance 1, and the component parts of which are indicated, wherever possible, using the same reference numbers as for corresponding parts of electric household appliance 1.

Electric household appliance 70 differs from electric household appliance 1 by the pushbutton 26 having the first terminal 27 connected to output terminal 9 of the switching regulator unit 13 of the switching mode low power supply unit 6, and the second terminal 28 connected only to first control terminal 11 of the switching regulator unit 13.

Moreover, the electric household appliance 70 comprises an additional pushbutton 71 having a first terminal 72 connected to an auxiliary terminal 74 having a prefixed voltage V5, i.e. V5=0 Volt, and a second terminal 73 connected to the sensing terminal 23 of the electronic control unit 20.

According to this embodiment, when electric household appliance 70 is in standby state and user pushes the pushbutton 26, the switching regulator unit 13 detects the first variation voltage ΔV=V1,-V2 and switches from standby state to the operating state.

On the other hand, when electric household appliance 70 is in operating state and user pushes the pushbutton 71, the electronic control unit 20 detects a standby command/request based on a predetermined variation voltage on the sensing terminal 23. In this case, electronic control unit 20 generates on the basis of the household appliance operative phases, the first control signal SVS that opens the switch device 40 to cause the sensing circuit 33a to be disconnected to the supply lines 31, 32 and command signal Soff that switches the switching regulator unit 13 from the operating state to standby state.

According to a different embodiment not shown in the drawings, the standby command/request may be communicated to the electronic control unit 20 via a communication line connected thereto. An appropriate circuit is designed for converting a standby determining event, like pressing a button by the user or the expiration of a machine rest time, into a standby command/request and communicating such request to the electronic control unit 20. Said circuit may be integrated on a user interface.

## Claims

1. Household appliance (1) comprising:
- electric loads (2) configured to perform prefixed appliance operations during an operating state;
- an electronic command device (3) which is connectable to an electric power supply (5) through supply lines (31,32) so as to be supplied by a first electrical quantity (VA), and is configured to reduce energy consumption of the electric household appliance (1) during a standby state;
said electronic command device (3) comprising:
- first switch means (4) connected between the household appliance electric loads (2) and the supply lines (31,32) and configured to switch on/off based on a first control signal (SFC);
- sensing means (33), which are connected to the supply lines (31,32) to sense said first electrical quantity (VA) and are configured to generate a sensing signal (SHV) which is indicative of the sensed first electrical quantity (VA);
- electric control means (20), which are configured to receive said sensing signal (SHV) and provide said first control signal (SFC) to cause the first switch means (4) to be open/closed based on said sensing signal (SHV);
the household appliance (1) being **characterised in that** said electronic command device (3) comprises:
- second switch means (40) connected between said supply lines (31,32) and said sensing means (33) and configured to be open/closed on the basis of a second control signal (SVS) to cause the sensing means (33) to be connected/disconnected respectively to/from supply lines (31,32);
- said electric control means (20) being further configured to generate said second control signal (SVS) to cause said second switch means (40) to be open, based on a standby command/request which is indicative of a request of transition of the household appliance (1) to change from the operating state to the standby state.

2. Household appliance according to claim 1, comprising a switching mode low power supply unit (6), which is connected to said supply lines (31,32) to be supplied by said first electrical quantity corresponding to a first supply voltage (VA) and is configured to supply a second supply voltage (VB) to said electric control means (20) and to said sensing means (33) by means of at least an output terminal (9);
the switching mode low power supply unit (6) comprising a first control terminal (12) and being further configured to switch from the operating state to the standby state when said first control terminal (12) receives a command signal (Soff);
said electric control means (20) being further configured to provide said command signal (Soff) to said switching mode low power supply unit (6) and generate said first control signal (SFC) to open said first switch means (4) based on said standby command/request.

3. Household appliance according to claim 2, wherein said second switch means (40) comprise at least one opto-triac, which is configured to disconnect said sensing means (33) from supply lines (31,32) based on said second control signal (SVS) and is supplied by second supply voltage (VB) generated by the switching mode low power supply unit (6); the switching of said switching mode low power supply unit (6) to a standby state causing the interruption of the second supply voltage (VB) to said sensing means (33) and to said opto-triac.

4. Household appliance according to claims 2 or 3, wherein the switching mode low power supply unit (6) comprises:
- a switching regulator unit (13) comprising a first control terminal (11) and being configured to switch from the standby state to the operating state when detects a prefixed voltage variation (ΔV) on the second control terminal (11);
- a low voltage auxiliary supply means (14) supplying a predetermined low voltage (V1), different to zero, to said first control terminal (11) during at least said standby state;
said switching mode low power supply unit (6) being configured to turn-off said switching regulator unit (13) during said standby state and maintains turn-on said low voltage auxiliary supply means (14) so as to supply said predetermined low voltage (V1) different to zero to said first control terminal (11).

5. Household appliance according to claim 4, wherein said sensing means (33) comprise:
- a sensing circuit (33a) which is connected to said supply lines (31,32) by means of said second switch means (40) and is configured to sense said first supply voltage (VA) so as to generate said sensing signal (SHV); and
- a supply circuit (33b) connected at least to the output terminal (9) of said switching mode low power supply unit (6) so as to receive said second supply voltage (VB); said supply circuit (33b) being configured to automatically switch off when said switching regulator unit (13) switches on said standby state; said sensing circuit (33a) being configured to automatically switch off when said switch means (40) are open.

6. Household appliance according to any of the previous claims, wherein said electric control means (20) are configured to provide said second control signal (SVS) and first control signal (SFC) based on said standby command/request, so that said second switch means (40) are open before opening of said first switch means (4).

7. Household appliance according to any of the previous claims, wherein said electric control means (20) are configured to provide said second control signal (SVS) and said first control signal (SFC) based on a request of transition of the household appliance (1) to change from to the standby state to the operating state, so that said first switch means (4) is closed after closing said second switch means (40).

8. Household appliance according to any of the previous claims, wherein said standby command/request is detected/generated when a prefixed rest period of the appliance has been spent, and/or when a prefixed appliance event has been detected, and/or in response to a user command.

9. Household appliance according to any of the previous claims from 2 to 8, wherein said electronic control device (3) is configured to connect, at least temporarily, said first control terminal (11) to the output terminal (9) of the switching mode low power supply unit (6), or to an independent auxiliary terminal (31) having a predetermined voltage, to generate said prefixed voltage variation (ΔV) on said first control terminal (11) to cause said switching mode low power supply unit (6) to switch from one of said states to the other state.

10. Household appliance according to claim 9, wherein said switching regulator unit (13) comprises at least a second control terminal (12) and is configured to switch from said operating state to the standby state, when receive said command signal (Soff) on said second control terminal (12); said electronic control unit (20) comprising a sensing terminal (23) and being configured to generate said command signal (Soff) when detects said predetermined voltage variation (ΔV) on said sensing terminal (23).

11. Household appliance according to claim 10, wherein said electronic command device (3) comprises switching means (26) having a first (27) and a second terminal (28) respectively connected to said output terminal (9) and to said first control terminal (11) of said a switching regulator unit (13); an operation on said switching means (26) causing the variation voltage (ΔV) on said first control terminal (11) or generation of said command signal (Soff) on the basis of the voltage (VB) on said output terminal (9).

12. Household appliance according to claim 11, wherein said electronic control unit (20) is configured to automatically switch from a on-state to a off-state, when said switching regulator unit (13) switch on said standby state.

13. Household appliance as claimed in any one of the previous claims 11 or 12, wherein said switching means (26) comprise a pushbutton.

14. Method for reducing standby-state energy consumption of an electric household appliance (1)(60)(70) which comprises electric loads (2) configured to perform prefixed appliance operations during an operating state, and an electronic command device (3) which is configured to reduce energy consumption of the electric household appliance (1) during a standby state, and is connectable to an electric power supply (5) through supply lines (31,32) so as to be supplied by a first electrical quantity (VA);
said electronic command device (3) comprising:
first switch means (4) connected between the household appliance electric loads (2) and the supply lines (31,32) and configured to switch on/off based on a first control signal (SFC);
sensing means (33) which are connected to the supply lines (31,32) to sense said first electrical quantity (VA) and are configured to generate a sensing signal (SHV) which is indicative of the sensed first electrical quantity (VA);
second switch means (40) connected between said supply lines (31,32) and said sensing means (33) and configured to be open/closed on the basis of a second control signal (SVS), to cause the sensing means (33) to be connected/disconnected respectively to/from supply lines (31,32);
said method providing said first control signal (SFC) to cause the first switch means (4) to be open/closed, based on said sensing signal (SHV);
the method being **characterised in**:
generating said second control signal (SVS) to open said second switch means (40) based on a standby command/request which is indicative of a request of transition of the household appliance from the operating state to the standby state.

15. Method according to claim 14, wherein said electronic command device (3) comprises a switching mode low power supply unit (6), which is connected to said supply lines (31,32) to be supplied by said first electrical quantity corresponding to a first supply voltage (VA), and is configured to supply a second supply voltage (VB) to said electric control means (20) and to said sensing means (33);
the switching mode low power supply unit (6) comprising a second control terminal (12) and being further configured to switch from a operating state to a standby state, when said second control terminal (12) receives a command signal (Soff);
the method comprising the steps of
- providing said command signal (Soff) to said switching mode low power supply unit (6) and generating said first control signal (SFC) to open said first switch means (4), based on said standby command/request.
